(19) **Europäisches Patentamt**
**European Patent Office**
**Office européen des brevets**

(11) **EP 2 520 780 A1**

(12) **EUROPEAN PATENT APPLICATION**
published in accordance with Art. 153(4) EPC

(43) Date of publication:
**07.11.2012 Bulletin 2012/45**

(21) Application number: **10840776.8**

(22) Date of filing: **27.12.2010**

(51) Int Cl.:
**F02B 19/16** *(2006.01)*      **F02B 19/10** *(2006.01)*
**F02B 19/18** *(2006.01)*

(86) International application number:
**PCT/JP2010/007558**

(87) International publication number:
**WO 2011/080917 (07.07.2011 Gazette 2011/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.12.2009 JP 2009297646**

(71) Applicant: **Kawasaki Jukogyo Kabushiki Kaisha
Kobe-shi, Hyogo 650-8670 (JP)**

(72) Inventors:
• **TOKUOKA, Tetsuo
650-8670 Hyogo (JP)**
• **ISHII, Hiroyoshi
650-8670 Hyogo (JP)**

(74) Representative: **Witte, Weller & Partner
Königstrasse 5
70173 Stuttgart (DE)**

(54) **AUXILIARY CHAMBER-TYPE GAS ENGINE**

(57)    A gas engine is configured to inject a combustion gas from an auxiliary combustion chamber (2) through a plurality of nozzles (9), through which the auxiliary combustion chamber (2) and a main combustion chamber (1) are in communication with each other, so as to ignite a fuel in the main combustion chamber (1). An opening edge, at the auxiliary combustion chamber side, of each of the plurality of nozzles (9) is formed to have a curved surface (11). This structure makes it possible to maintain stable combustion in the main combustion chamber (1) while preventing degradation in combustion performance.

Fig. 2

## Description

## Technical Field

The present invention relates to a divided-chamber gas engine including an auxiliary combustion chamber (an auxiliary chamber), and particularly to nozzles (nozzle holes) through which a combustion gas is injected from the auxiliary combustion chamber of the gas engine into a main combustion chamber.

## Background Art

Divided-chamber gas engines include a main combustion chamber (which may be hereinafter referred to as a "main chamber") and an auxiliary combustion chamber (which may be hereinafter referred to as an "auxiliary chamber") connected to the main combustion chamber via nozzles. A lean air-fuel mixture (a fuel gas) is supplied to the main chamber through an air supply valve. The lean air-fuel mixture is produced by mixing a gaseous fuel and supplied air. The lean air-fuel mixture is such that air that is greater in amount than a theoretical air requirement is mixed into the fuel. Accordingly, the excess air ratio $\lambda$ of the lean air-fuel mixture is high (e.g., $\lambda$ is approximately 2). The auxiliary chamber is provided with a spark plug. A rich air-fuel mixture (a fuel gas for ignition), the excess air ratio $\lambda$ of which is 1 or lower, is supplied to the auxiliary chamber. In the divided-chamber gas engine as above, first, the spark plug provided in the auxiliary chamber is fired and thereby the fuel gas for ignition in the auxiliary chamber is ignited. A flame produced in the auxiliary chamber propagates such that the flame front spreads from the spark plug in a spherical manner. Then, a high-temperature fuel gas jets into the main chamber in the form of jet flames through a plurality of nozzles. From the jet flames, the flame propagates to the lean fuel gas in the main chamber. At the time, the temperature of the inner wall surface of the auxiliary chamber reaches approximately 1000 °C.

In the above divided-chamber gas engine, the plurality of nozzles connecting the auxiliary chamber and the main chamber are open radially at the bottom part of the auxiliary chamber. Accordingly, the jet flames that jet into the main chamber through the nozzles spread within the main chamber in a distributed manner. It is necessary for the jet flames, which are injected from the auxiliary chamber into the main chamber through the nozzles, to have sufficient intensity for igniting the fuel gas in the main chamber, that is, sufficient injection quantity and jet velocity. In consideration of the above-described combustion in the main chamber, the nozzles are designed such that the intensity of the jet flames becomes optimal.

When the rich air-fuel mixture, the excess air ratio $\lambda$ of which is 1 or lower, is combusted, NOx of several thousand ppm is produced. Therefore, it is necessary to install a denitration device. However, generally speaking, in a case where the lean air-fuel mixture is combusted (i.e., lean burn), the amount of NOx to be produced is suppressed to approximately several hundred ppm. Therefore, for performing lean burn, the installation of a denitration device is unnecessary in some cases.

The inner wall of the auxiliary chamber of the divided-chamber gas engine is formed of a nickel-based alloy (e.g., Inconel). Usually, the nozzles (nozzle holes) connecting the auxiliary chamber and the main chamber of the divided-chamber gas engine are formed as straight pipes by machining. If such a conventional divided-chamber gas engine is operated for a long period of time, the edge of the nozzles' inlets at the auxiliary chamber side becomes deformed. As mentioned above, the temperature in the auxiliary chamber becomes 1000 °C or higher. Accordingly, the inner wall surface of the auxiliary chamber is repeatedly subjected to heating and cooling cycles, in which the inner wall surface expands due to exposure to a high-temperature atmosphere and contracts when cooling down. Due to such heating and cooling cycles, the inner wall of the auxiliary chamber is subjected to thermal fatigue. As a result, cracks occur. In particular, cracks mainly occur near the nozzles' opening edges at the auxiliary chamber side. If the severity of the cracks near the nozzles' opening edges at the auxiliary chamber side increases, then cracks also occur in the inner wall of the nozzles. If a high-temperature jet flame passes through such a cracked inner wall of a nozzle, then cracked portions partially come off, resulting in chipping of the edge of the nozzle's inlet (i.e., chipping of the opening edge), or the inner wall of the nozzle or the inner wall of the auxiliary chamber at the rim of the nozzle peels off, causing its surface to become rough.

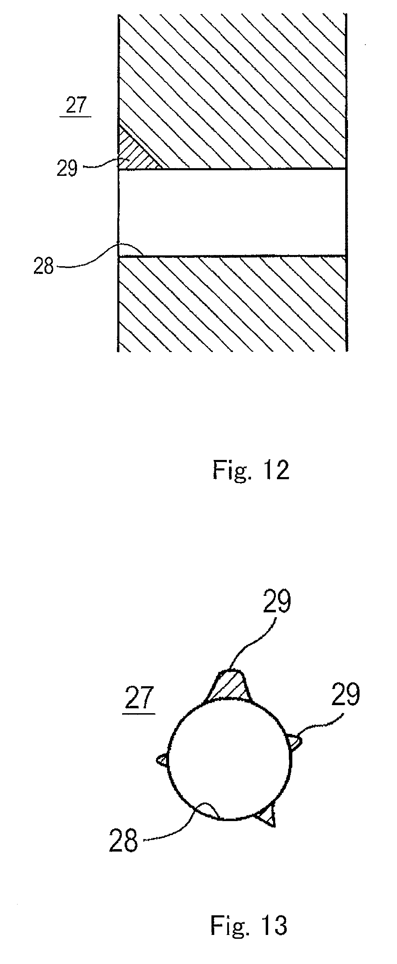

Fig. 12 and Fig. 13 show an edge-chipped state of the opening edge (i.e., the edge of the inlet) of the nozzle at the auxiliary chamber side. Fig. 12 is a cross-sectional view of the nozzle along the axial direction, and Fig. 13 shows the nozzle seen from the auxiliary chamber side. Fig. 12 shows a state where chipping 29 has occurred at the opening edge of a nozzle 28 at an auxiliary chamber 27 side. Due to the chipping 29, the corner of the edge of the inlet of the nozzle 28 is partially cut out and rounded. If such chipping 29 occurs at multiple points at the opening edge of the nozzle 28 at the auxiliary chamber 27 side, then the opening edge of the inlet of the nozzle 28 becomes like a deformed star shape as shown in Fig. 13.

Chipping and cracks at the edge of the inlet of the nozzle cause a change in the intensity of a jet flame, which may lead to a decrease in the engine's combustion performance. Usually, divided-chamber gas engines are designed so that the engines can exert predetermined functions under optimized conditions, under the assumption that the edge of the inlet of each nozzle is in perfect conditions where there is no chipping or the like at the edge. If chipping or cracks occur at the edge of the inlet of the nozzle, the cross-sectional shape of the nozzle changes. As a result, the intensity of a jet flame that jets out though the nozzle also changes. For example, if the diameter of the nozzle increases, then the intensity of the jet flame decreases. In this case, there is a possibility that the length of the jet flame becomes insufficient. Moreover, the degree of such chipping and cracks is not necessarily the same among a plurality of nozzles. Accordingly, the jet flame intensity becomes different from nozzle to nozzle. If an ignition environment in the main chamber becomes less uniform than that originally designed, it may result in a decrease in the engine's combustion efficiency.

Patent Literature 1 discloses an invention in relation to nozzle holes of a swirl chamber type combustion chamber of a diesel engine that is manually operable in a low-temperature atmosphere. Patent Literature 1 discloses that an inlet, at a swirl chamber side, of a main nozzle hole with two side nozzle holes positioned at its sides is chamfered. However, the nozzle hole used in the diesel engine disclosed in Patent Literature 1 is a single nozzle hole having a large aperture diameter. Since a fluid that passes through the nozzle hole is used as a fuel, its temperature is low and there is no possibility that crack-like flaws occur at the inlet or in the wall of the nozzle hole. Thus, the technical nature of this nozzle hole is different from the technical nature of the nozzle holes of a divided-chamber gas engine for injecting jet flames from the auxiliary chamber into the main chamber. Moreover, the chamfering disclosed in Patent Literature 1 is intended to merely form an obtuse-angled edge for the purpose of preventing a fuel that is jetted into the swirl chamber from splashing by hitting the rim of the nozzle hole.

Patent Literature 2 discloses a fuel combustion system for an engine, which is configured to supply jet flames from an auxiliary combustion chamber to a main combustion chamber through ejection passages at a speed greater than the speed of sound. Patent Literature 2 discloses that the ejection passages for ejecting a combustion gas from the auxiliary combustion chamber to the main combustion chamber include an inlet portion having a conical internal surface. The conical internal surface is inclined with respect to a central axis by an angle in the range of 15° to 30°. The conical internal surface is an inclined surface formed at the inlet side of tube-shaped ejection passages, which are formed in a venturi tube-like shape for the purpose of ejecting a fluid at high speed. Therefore, the conical internal surface does not have a function of suppressing cracks and edge chipping at the inlet portion of the passages.

Citation List

**Patent Literature**

PTL 1: Japanese Laid-Open Patent Application Publication No. 3-70812

PTL 2: Japanese National Phase PCT Laid-Open Publication No. 5-504185

**Summary of Invention**

**Technical Problem**

A problem to be solved by the present invention is to provide a divided-chamber gas engine including a main combustion chamber (a main chamber) and an auxiliary combustion chamber (an auxiliary chamber), the divided-chamber gas engine being capable of maintaining stable combustion in the main combustion chamber while suppressing degradation in combustion performance.

**Solution to Problem**

In order to solve the above problem, a divided-chamber gas engine according to the present invention is a gas engine configured to inject a combustion gas from an auxiliary combustion chamber through a plurality of nozzles, through which the auxiliary combustion chamber and a main combustion chamber are in communication with each other, so as to ignite a fuel in the main combustion chamber. An opening edge, at the auxiliary combustion chamber side, of each of the plurality of nozzles has a chamfered shape.

In the divided-chamber gas engine, it is desired that the chamfered shape is a round chamfered shape, and the opening edge is formed to have a curved surface.

In the divided-chamber gas engine, it is preferred that a portion, having the chamfered shape, of the opening edge, at the auxiliary combustion chamber side, of each of the plurality of nozzles is spaced apart from a portion, having the chamfered shape, of the opening edge, at the auxiliary combustion chamber side, of the other of the plurality of nozzles, such that interference between the portions having the chamfered shape is prevented.

In the divided-chamber gas engine, it is preferred that the curved surface has a curvature radius greater than or equal to a diameter of each nozzle.

Alternatively, in the divided-chamber gas engine, the curved surface has a curvature radius which may be set, such that a temperature increase or decrease at the opening edge, at the auxiliary combustion chamber side, of each of the plurality of nozzles is less than a temperature increase or decrease at a portion of an inner wall of the auxiliary combustion chamber, the portion being a closest portion of the inner wall to the main combustion chamber.

**Advantageous Effects of Invention**

In the divided-chamber gas engine according to the present invention, the edge of the inlet of each nozzle at the auxiliary combustion chamber side is formed into a curved surface. Therefore, at the inlet of the nozzle, there is no edge that tends to be chipped. This makes it possible to suppress a phenomenon where cracked portions partially come off, to prevent deformation of the nozzle's cross section, and to suppress degradation in the combustion performance in the main combustion chamber.

**Brief Description of Drawings**

[Fig. 1] Fig. 1 is a conceptual diagram showing a structure of a divided-chamber gas engine according to one embodiment of the present invention.
[Fig. 2] Fig. 2 is a cross-sectional view showing a nozzle part of an auxiliary combustion chamber of the divided-chamber engine according to the present embodiment.
[Fig. 3] Fig. 3 is an enlarged cross-sectional view showing a nozzle shape according to the present embodiment.
[Fig. 4] Fig. 4 is a partial cross-sectional view of an auxiliary chamber forming body, showing a factor for calculating the minimum value of the curvature radius of a curved surface.
[Fig. 5] Fig. 5 shows a view as seen in the direction of the arrows of line V-V in Fig. 4, and shows a tip portion thermal conduction area $A_1$.
[Fig. 6] Fig. 6 is a front view of a nozzle's opening at the auxiliary chamber side, and shows an opening thermal conduction area $A_2$.
[Fig. 7] Fig. 7 is a cross-sectional view of the bottom part of the auxiliary chamber, for use in describing a relationship between the thickness of the bottom wall of the auxiliary chamber and the curvature radius of the curved surface.
[Fig. 8] Fig. 8 is a conceptual diagram illustrating the arrangement of nozzles according to the present embodiment.
[Fig. 9] Fig. 9 is a photo showing nozzles' openings at an auxiliary chamber side after a divided-chamber gas engine including an auxiliary chamber forming body according to a working example of the present invention has been operated for 4000 hours.
[Fig. 10] Fig. 10 is a photo showing nozzles' openings at an auxiliary chamber side after a divided-chamber gas engine including an auxiliary chamber forming body according to a comparative example has been operated for 1000 hours.
[Fig. 11] Fig. 11 is a graph showing an example of temporal changes in the power generation efficiency of the divided-chamber gas engine according to the working example and the power generation efficiency of the divided-chamber gas engine according to the comparative example.
[Fig. 12] Fig. 12 illustrates an edge-chipped state of the inlet of a nozzle of a conventional auxiliary combustion chamber, and is a cross-sectional view of the nozzle along the axial direction.
[Fig. 13] Fig. 13 illustrates the edge-chipped state of the inlet of the nozzle of the conventional auxiliary combustion chamber, and shows the nozzle seen from the auxiliary chamber side.

**Description of Embodiments**

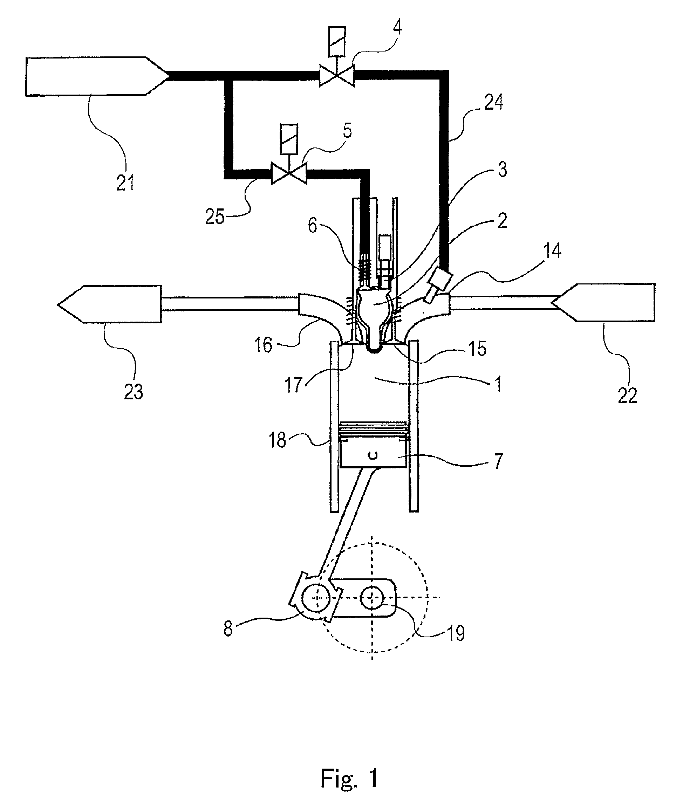

Hereinafter, one embodiment of a divided-chamber gas engine according to the present invention is described in detail with reference to the accompanying drawings. Fig. 1 is a conceptual diagram showing a structure of the divided-chamber gas engine according to the embodiment of the present invention. As shown in Fig. 1, the divided-chamber gas engine according to the present embodiment includes a two-stage combustion chamber including a main combustion chamber (which may be hereinafter referred to as a "main chamber") 1 and an auxiliary combustion chamber (which may be hereinafter referred to as an "auxiliary chamber") 2 connected to the main chamber 1 via a plurality of nozzles 9. The divided-chamber gas engine is a gas engine configured to perform so-called two-stage combustion, in which a lean air-fuel mixture, i.e., a fuel, supplied into the main chamber 1 is ignited by high-temperature jet flames that jet out from the auxiliary chamber 2 through the nozzles 9.

The main chamber 1 is formed within a cylinder 18. Provided below the main chamber 1 is a piston 7 configured to move in a sliding manner within the cylinder 18. The piston 7 is connected to a drive shaft 19 via a crank 8. When the piston 7 moves within the cylinder 18 in a reciprocating manner, the drive shaft 19 rotates via the crank 8.

Provided above the main chamber 1 is an air supply pipe 14 connected to an air supply source 22. An air supply valve 15 configured to open and close between the air supply pipe 14 and the main chamber 1 is provided between the air supply pipe 14 and the main chamber 1. The air supply pipe 14 is connected to a fuel gas source 21 via a fuel supply pipe 24. The fuel gas is LNG, for example. The fuel supply pipe 24 is provided with a main solenoid valve 4 which is configured to adjust the amount of fuel gas supplied to the air supply pipe 14.

A controller that is not shown generates a command in synchronization with an operation of the air supply valve 15 of the main chamber 1. In response to the command, the main solenoid valve 4 opens for a predetermined period. As a result, a predetermined amount of fuel gas is supplied from the fuel gas source 21 to the air supply pipe 14 through the fuel supply pipe 24. When the fuel gas supplied to the air supply pipe 14 is mixed into a flow of air supplied from the air supply source 22, a lean air-fuel mixture (a fuel gas) is produced. It should be noted that if the air-fuel mixture is thicker than a theoretical air-fuel ratio, then the air-fuel mixture is called a rich air-fuel mixture, and also, if the air-fuel mixture is thinner than the theoretical air-fuel ratio, then the air-fuel mixture is called a lean air-fuel mixture. The produced lean air-fuel mixture is supplied from the air supply pipe 14 to the main chamber 1 when the air supply valve 15 is opened. The air-fuel mixture to be supplied to the main chamber 1 is adjusted, for example, such that the air-fuel ratio becomes approximately twice the theoretical air-fuel ratio (i.e., excess air ratio $\lambda$ = 2). Combustion of the lean air-fuel mixture is lean burn (lean combustion), in which the amount of NOx to be produced is small.

An exhaust gas pipe 16, which leads to an exhaust gas part 23 (i.e., to the outside), is connected to the upper part of the main chamber 1. An exhaust gas valve 17 configured to open and close between the exhaust gas pipe 16 and the main chamber 1 is provided between the exhaust gas pipe 16 and the main chamber 1. When the exhaust gas valve 17 is opened, a flue gas is discharged from the main chamber 1 to the exhaust gas part 23 through the exhaust gas pipe 16.

The auxiliary chamber 2 is provided with a spark plug 3. Further, the auxiliary chamber 2 is connected to the fuel gas source 21 via a fuel supply pipe 25. The fuel supply pipe 25 is provided with an auxiliary solenoid valve 5 for adjusting the amount of fuel gas supplied to the auxiliary chamber 2, and a check valve 6 for preventing a reverse flow of the fuel gas from the auxiliary chamber 2 to the fuel supply pipe 25. The auxiliary solenoid valve 5 opens for a predetermined period in response to a command generated by the controller which is not shown. As a result, the fuel gas that is in a necessary amount is supplied from the fuel gas source 21 to the auxiliary chamber 2 through the fuel supply pipe 25 and the check valve 6.

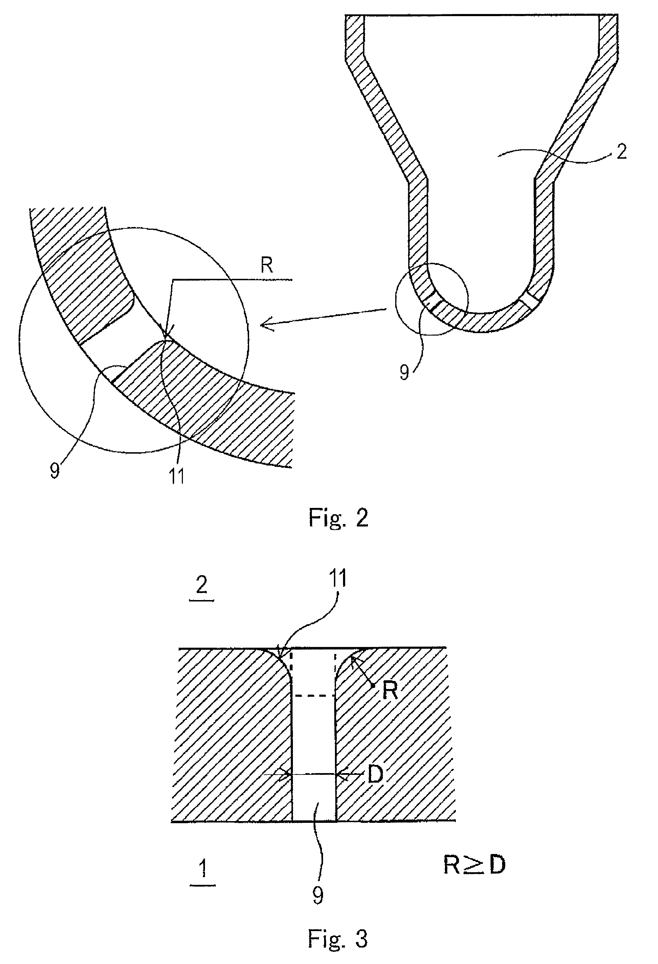

Fig. 2 is a cross-sectional view showing the bottom part of the auxiliary chamber 2. The bottom part is provided with nozzles (nozzle holes). Fig. 2 contains an enlarged cross-sectional view that shows a portion around a nozzle 9 in an enlarged manner. The bottom part of the auxiliary chamber 2 is formed to protrude into the main chamber 1. The bottom part of the auxiliary chamber 2 has a semi-spherical shape having a central axis extending in a direction in which the piston 7 moves. The nozzles 9 are formed in the bottom part of the auxiliary chamber 2, and allow the main chamber 1 and the auxiliary chamber 2 to be in communication with each other. In the bottom part of the auxiliary chamber 2, openings (serving as inlets at the auxiliary chamber 2 side) of the respective nozzles 9 are arranged on a single circle, the center of which coincides with the central axis. The openings of the respective nozzles 9 are arranged on the single circle, the center of which coincides with the central axis of the auxiliary chamber 2. The nozzles 9 are formed to radially extend through the bottom wall of the auxiliary chamber 2, such that the radial extending directions of the respective nozzles 9 center on a particular point on the central axis of the auxiliary chamber 2. Each nozzle 9 has substantially the same nozzle diameter and nozzle length. Accordingly, jet flames that jet into the main chamber 1 through the respective nozzles 9 have substantially the same intensity. Therefore, the jet flames evenly jet into the main chamber 1.

Next, the combustion of the air-fuel mixture in the combustion chamber is described in detail. In the divided-chamber gas engine having the above-described structure, the fuel gas is supplied to the auxiliary chamber 2 at the same time as the lean air-fuel mixture is sucked into the main chamber 1 in a suction stroke. Since the nozzles 9 are always in the state of communication, the lean air-fuel mixture flows into the auxiliary chamber 2 when the piston 7 is lifted in the following compression stroke.

For example, in the case of an engine with a compression ratio of 10, the fuel gas is supplied from the fuel gas source 21 to the auxiliary chamber 2 through the fuel supply pipe 25 in an amount that corresponds to the volume of the auxiliary chamber, and the supplied fuel gas is compressed to 1/10. Meanwhile, the lean air-fuel mixture with the excess air ratio $\lambda$ of approximately 2 is supplied from the inside of the main chamber 1 to the auxiliary chamber 2 through the nozzles 9 in an amount that corresponds to 9/10 of the volume of the auxiliary chamber. The fuel gas and the lean air-fuel mixture are mixed in the auxiliary chamber 2, and becomes an air-fuel mixture with the excess air ratio $\lambda$ of approximately 1, that is, an air-fuel mixture with the theoretical air-fuel ratio

When the spark plug 3 is fired in the auxiliary chamber 2 near the compression top dead center, the air-fuel mixture is ignited in the auxiliary chamber 2. The air-fuel mixture, while being combusted, jets into the main chamber 1 through the nozzles 9 in the form of high-temperature jet flames. The lean air-fuel mixture in the main chamber 1 is ignited by the jet flames and explodes, and the resultant force lowers the piston 7. When the piston 7 moves, the drive shaft 19 rotates via the crank 8, accordingly. A combustion gas that is produced in the main chamber 1 is released to the exhaust gas part 23 (i.e., to the outside) through the exhaust gas pipe 16 when the exhaust gas valve 17 is opened.

Each nozzle 9 according to the present embodiment has such a shape that the edge of the nozzle's inlet at the auxiliary chamber 2 side, i.e., the corner of the opening edge at the auxiliary chamber 2 side, is chamfered. Examples of the chamfered shape include a shape in which the corner is rounded and a shape in which the corner is cut out diagonally (the diagonal angle is not particularly limited). One of these shapes is selected depending on machining conditions. However, the chamfered shape is desirably a round chamfered shape since such a shape does not allow a sharp ridge to be formed at a position where the inner wall of the auxiliary chamber 2 and the inner wall of the nozzle join. Fig. 3 is an enlarged cross-sectional view showing a nozzle shape according to the present embodiment. In the example shown in Fig. 3, the edge of the inlet of the nozzle 9 at the auxiliary chamber 2 side is chamfered such that the corner of the opening edge is rounded, and as a result, a curved surface 11 with a curvature radius R is formed. Thus, neither a right-angled edge, nor a nearly right-angled edge such as an acute-angled or obtuse-angled edge, both of which tend to be chipped, is formed at the opening edge of the nozzle 9 at the auxiliary chamber 2 side.

If a right-angled corner, or a nearly right-angled corner such as an acute-angled or obtuse-angled corner, is formed at the opening edge of the nozzle 9 at the auxiliary chamber 2 side, then the temperature of such a cornered portion increases more easily than other portions. For example, assume a case where there is a corner formed at the opening edge of the nozzle 9 at the auxiliary chamber 2 side and the temperature variation range of the corner is approximately 50 to 1000 °C. In this case, the temperature variation range of other portions, different from the corner, of the bottom wall in the auxiliary chamber 2 remains approximately 50 to 700 °C. That is, if there is a corner formed at the opening edge of the nozzle 9 at the auxiliary chamber 2 side, the temperature of the corner easily increases to a significantly higher temperature than the temperature of other portions. However, since there is no corner formed at the opening edge of each nozzle 9 at the auxiliary chamber 2 side according to the present embodiment, the temperature variation range of the opening edge and its surrounding portions is narrower, which realizes more uniform temperature distribution. In addition, the highest temperature in the temperature variation range is lower. Therefore, heat stress exerted on the opening edge of the nozzle 9 at the auxiliary chamber 2 side is reduced, and the degree of thermal fatigue is reduced as compared to a case where a corner is formed.

Furthermore, since there is no corner formed at the opening edge of each nozzle 9 at the auxiliary chamber 2 side, an air stream that passes through the nozzle 9 smoothly flows downward along a streamline. Accordingly, even if there are cracks formed in the wall surface in the auxiliary chamber 2 at the inlet of the nozzle 9 or in the inner wall of the nozzle 9, the following phenomenon does not easily occur: when a high-temperature jet flame passes through the nozzle 9 at high speed, cracked portions of the surface are partially torn away and thereby chipped.

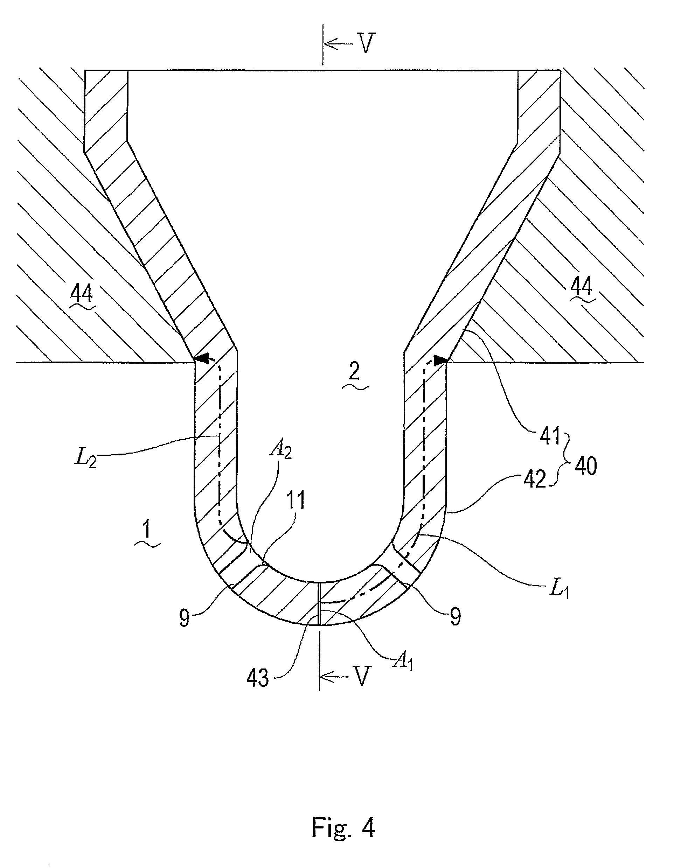

The curvature radius R of the curved surface 11 formed at the opening edge of each nozzle 9 may be set in consideration of thermal conduction energy, aiming to equalize a temperature increase or decrease at the opening edge of the nozzle 9 of the auxiliary chamber 2 with a temperature increase or decrease at other portions of the inner wall of the auxiliary chamber 2. As shown in Fig. 4, an auxiliary chamber forming body 40, within which the auxiliary chamber 2 is formed, includes a base portion 41 and a protruding portion 42 which is formed in a manner to protrude from the base portion 41 toward the main chamber 1. The protruding portion 42 has a cylindrical shape, one end of which is open whereas the other end of which is closed and round shaped. The longitudinal section of the protruding portion 42 along the central axis is substantially U-shaped. The tip of the protruding portion 42 is inserted in the main chamber 1, and the plurality of nozzles 9 are formed in the inserted portion. The base portion 41 is cooled down by cooling means 44 which is, for example, cooling water. In the auxiliary chamber forming body 40, other than the opening edge of each nozzle 9, a position where the temperature increases most easily is a tip 43 of the protruding portion 42 which is the most distant portion from the cooling means 44. The tip 43 is the closest point of the protruding portion 42 to the main chamber 1. Therefore, it is suitable that the curvature radius R is set such that a temperature increase or decrease at the opening edge of each nozzle 9 in the inner wall of the auxiliary chamber 2 becomes less than or equal to a temperature increase or decrease at the tip 43 of the protruding portion 42, which is the closest point of the protruding portion 42 to the main chamber 1.

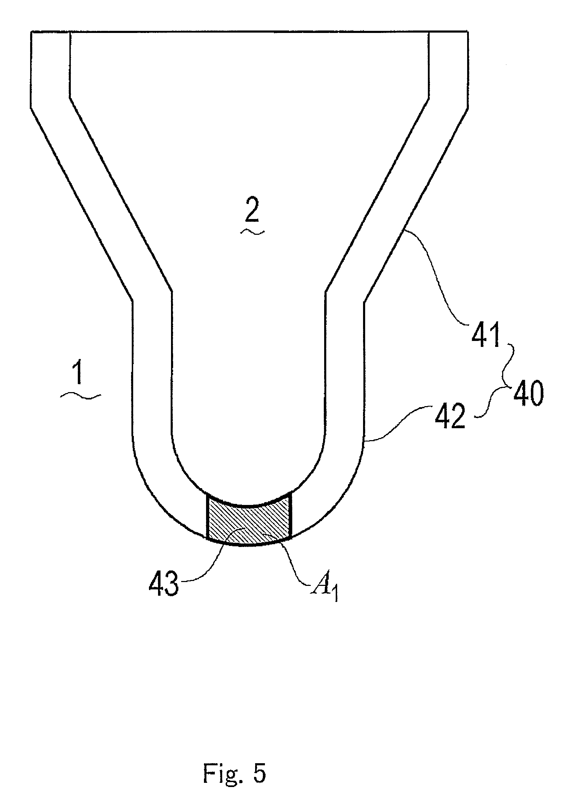

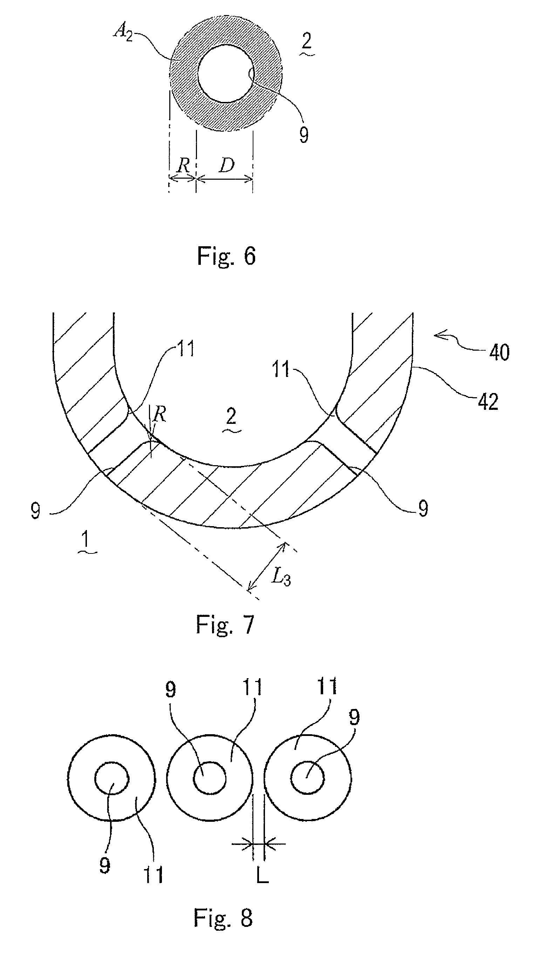

In the auxiliary chamber forming body 40 shown in Fig. 4, the thermal conduction area of the tip 43 of the protruding portion 42 is a tip portion thermal conduction area $A_1$ (indicated by diagonal hatching in Fig. 5). A distance by which heat is conducted from the tip 43 of the protruding portion 42 to the cooling means 44 is a tip portion thermal conductive distance $L_1$. Further, in the auxiliary chamber forming body 40, the area of the curved surface 11 (i.e., the area of a portion having a chamfered shape) of the opening edge of one nozzle 9 at the auxiliary chamber 2 side is an opening thermal conduction area $A_2$ (indicated by diagonal hatching in Fig. 6). A distance by which heat is conducted from the curved surface 11 of the opening edge of the nozzle 9 to the cooling means 44 is an opening thermal conduction distance $L_2$. In order for a temperature increase or decrease at the opening edge of the nozzle 9 to become less than or equal to a temperature increase or decrease at the tip 43 of the protruding portion 42, it is necessary that the amount of heat to be dissipated from the opening edge of the nozzle 9 to the cooling means 44 (i.e., to the outside) is more than or equal to the amount of heat to be dissipated from the tip 43 of the protruding portion 42 to the cooling means 44.

Of the amount of heat that a portion of the inner wall of the auxiliary chamber 2 receives owing to combustion, the amount of heat to be dissipated to the cooling means 44 can be represented by the product of the thermal conductivity of the portion per unit area and the area of the portion. Under this theory, a relationship represented by Equation 1 below is obtained.

[Equation 1]

$$A_2 \geq \frac{L_2}{L_1} A_1 \times \frac{1}{n}$$

The above Equation 1 indicates that the total of the opening thermal conduction areas $A_2$ of n nozzles 9 formed in the auxiliary chamber forming body 40 is greater than the tip portion thermal conduction area $A_1$ multiplied by the proportion of the opening thermal conduction distance $L_2$ to the tip portion thermal conductive distance $L_1$. The curvature radius R of the curved surface 11 may be any value that allows Equation 1 to be satisfied. That is, the minimum value of the curvature radius R of the curved surface 11 may be set based on Equation 1. It should be noted that it is desired that the opening thermal conduction area $A_2$ is great since the greater the opening thermal conduction area $A_2$, the more the amount of heat to be dissipated from the opening edge of the nozzle 9 to the cooling means 44 and the more suppressed the increase in the temperature at the opening edge of the nozzle 9.

The diameter (internal diameter) D of each nozzle 9 according to the present embodiment is several mm to ten-odd mm. The curved surface 11 formed at the opening edge of the nozzle 9 flares out toward the outside such that the diameter increases. Easily damaged portions of the wall surface in the auxiliary chamber 2 are those positioned several mm away from the inner wall of the nozzle 9. Therefore, the curvature radius R, which satisfies the relationship of the above Equation 1, of the curved surface 11 of the opening edge of the nozzle 9 at the auxiliary chamber 2 side may be, for example, greater than or equal to the nozzle diameter D. For example, if the curvature radius R of the curved surface 11 is greater than or equal to the nozzle diameter D, then the curvature radius R of the inlet of the nozzle 9 is sufficiently great and the inlet has no acute-angled portion. Therefore, an occurrence of a phenomenon where cracked portions are torn away and chipped is suppressed. Accordingly, chipping of the edge is reduced. Further, an incident angle at which an energy line from the inside of the auxiliary chamber 2 hits the curved surface 11 of the opening edge of the nozzle 9 is greater than in a case where the auxiliary chamber 2 side of the opening edge of the nozzle 9 is a flat surface. Therefore, damage to the curved surface 11 is reduced.

The maximum value of the curvature radius R of the curved surface 11 is not particularly limited. However, the length of the nozzle 9 decreases in accordance with an increase in the curvature radius R of the curved surface 11. Therefore, it is desired that the curvature radius R is in a range that allows the nozzle 9 to have such a length as to be able to jet out a jet flame. Fig. 7 is a cross-sectional view of the bottom part of the auxiliary chamber, for use in describing a relationship between the thickness of the bottom wall of the auxiliary chamber and the curvature radius of the curved surface. As shown in Fig. 7, when the thickness of the bottom wall of the auxiliary chamber forming body 40 is $L_3$, the curvature radius R is desirably 0.5 times, or less, of the thickness $L_3$ of the bottom wall.

Since the openings, at the auxiliary chamber 2 side, of the respective nozzles 9 are close to each other, if the curvature radius R of the curved surface 11 is excessively great, then the strength of the nozzles 9 cannot be maintained. Therefore, it is desired to adopt such a curvature radius R that an interference margin between the curved surfaces 11 of adjacent nozzles 9 is sufficiently small to maintain the strength of the nozzles 9, or that there is no interference margin between the curved surfaces 11 of adjacent nozzles 9. Fig. 8 is a conceptual diagram illustrating the arrangement of the nozzles according to the present embodiment. For the purpose of facilitating the understanding, Fig. 4 shows only three nozzles among the plurality of nozzles 9 formed in the auxiliary chamber 2. It is desired that the curvature radius R of the curved surface 11 is great since the greater the curvature radius R, the less the damage to the nozzle 9. However, if the curved surface 11 formed at the opening edge of one nozzle 9 overlaps (interferes) with the curved surface 11 formed at the opening edge of the adjacent nozzle 9, then there is a possibility that even slight deformation occurring at the curved surfaces 11 causes a change in the boundary of a fluid flowing into the nozzles 9. As a result, the shapes of jet flames that are formed when passing through respective adjacent nozzles 9 become different from each other. This may cause a combustion state different from the one originally designed, resulting in degradation of the combustion performance in the main chamber 1. Therefore, it is preferred that a distance between nozzles 9 and the size of the curved surface 11 of each nozzle 9 are adjusted, such that a distance L is obtained between the ends of respective curved surfaces 11 formed at the opening edges of adjacent nozzles 9.

Although in the above-described present embodiment only the opening edge at the auxiliary chamber 2 side is chamfered, the opening edge of each nozzle 9 at the main chamber 1 side may also be chambered. In other words, the edge of the inlet of each nozzle 9 at the main chamber 1 side may have such a chamfered shape that the corner of the edge is either rounded or cut out diagonally. If the opening edge of each nozzle 9 at the main chamber 1 side has such a chamfered shape, the passage resistance is reduced when the lean air-fuel mixture flows from the main chamber 1 to the auxiliary chamber 2. This makes it possible to reduce fluid pressure loss. Moreover, if the nozzle 9 has an acute-angled edge at the main chamber 1 side, then during an abnormal state, the edge may act as a flint and cause an ignition, thereby causing knocking. However, through the chamfering, the edge is made obtuse, and thereby knocking can be suppressed.

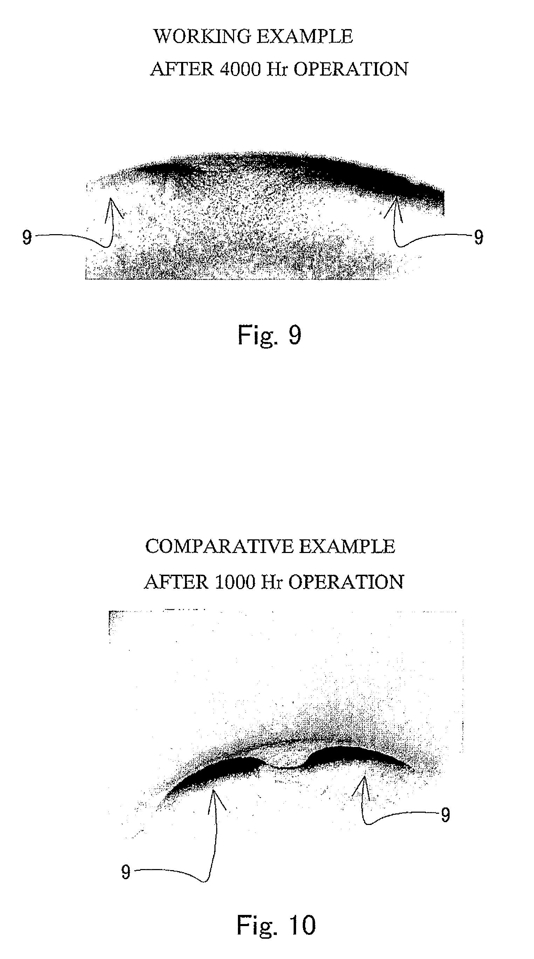

Fig. 9 is an enlarged photo showing the openings of nozzles 9 at the auxiliary chamber 2 side after a divided-chamber gas engine including an auxiliary chamber forming body according to a working example of the present invention has been operated for 4000 hours under particular operation conditions. The opening edge, at the auxiliary chamber 2 side, of each nozzle 9 formed in the auxiliary chamber forming body according to the working example has a round chamfered shape. It is understood from Fig. 9 that, in the auxiliary chamber forming body according to the working example, even after a relatively long 4000-hour operation, almost no deformation was observed in the shape of the round chamfered opening edge of each nozzle 9. On the other hand, Fig. 10 is an enlarged photo showing the openings of nozzles 9 at the auxiliary chamber 2 side after a divided-chamber gas engine including an auxiliary chamber forming body according to a comparative example has been operated for 1000 hours under the same operation conditions as above. The opening edge, at the auxiliary chamber 2 side, of each nozzle 9 formed in the auxiliary chamber forming body according to the comparative example had a substantially right-angled corner before the operation. However, it is understood from Fig. 10 that, after the operation, the opening edge at the auxiliary chamber 2 side was deformed due to a large number of deep cracks and chipping. It is understood from the comparison of Fig. 9 and Fig. 10 that temporal changes in the shape of the opening edge of the nozzle 9 are significantly suppressed when the opening edge of the nozzle 9 at the auxiliary chamber 2 side has a chamfered shape.

If the opening edge of the nozzle 9 at the auxiliary chamber 2 side is chipped and thereby the cross-sectional shape of the nozzle 9 changes as in the auxiliary chamber forming body according to the comparative example, then the intensity of the jet flame that jets into the main chamber 1 through the nozzle 9 changes. In particular, the jet flame becomes short if the nozzle diameter increases due to such a change in the cross-sectional shape of the nozzle 9. If the jet flame becomes shorter than the original design, spontaneous ignition of the air-fuel mixture in the cylinder 18 (i.e., knocking) tends to occur. General gas engines have a function of preventing knocking. Therefore, under conditions where knocking tends to occur, control for preventing the knocking is performed. Consequently, the combustion efficiency of the gas engine decreases.

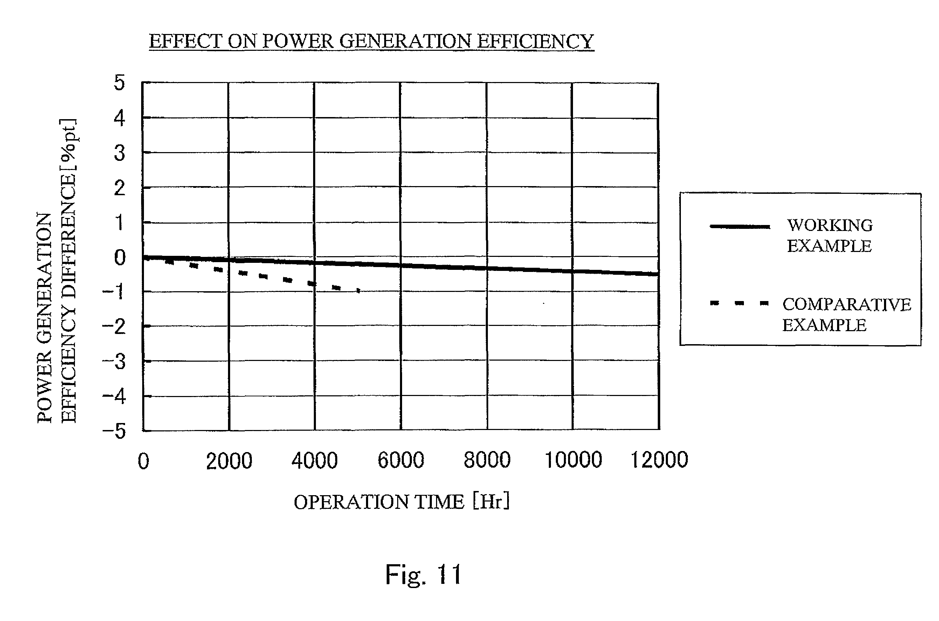

Fig. 11 shows temporal changes in the power generation efficiency of the divided-chamber gas engine according to the working example and the power generation efficiency of the divided-chamber gas engine according to the comparative example. In the graph of Fig. 11, the vertical axis, on which an initial-state power generation efficiency is indicated as 0 %, represents a power generation efficiency difference which is a rate of increase/decrease in the power generation efficiency from the initial-state power generation efficiency. The horizontal axis represents an operation time. Temporal changes in the power generation efficiency difference of the divided-chamber gas engine according to the working example are indicated in a solid line in the graph, and temporal changes in the power generation efficiency difference of the divided-chamber gas engine according to the comparative example are indicated in a chain line in the graph. In the divided-chamber gas engine according the working example, the opening edge of each nozzle 9 at the auxiliary chamber 2 side has a chamfered shape. The structure, operation conditions, etc., of the divided-chamber gas engine according to the comparative example are the same as those of the divided-chamber gas engine according to the working example except that, in the divided-chamber gas engine according to the comparative example, the opening edge of each nozzle 9 at the auxiliary chamber 2 side has a corner. It is clear from the graph in Fig. 11 that the divided-chamber gas engine according to the comparative example exhibits degradation in the power generation efficiency difference three times or more faster than the divided-chamber gas engine according to the working example. It is presumed that the degradation, shown in the graph, in the power generation efficiency difference of the divided-chamber gas engine according to the comparative example is mainly caused by a change in the cross-sectional shape of the nozzles 9. The divided-chamber gas engine according to the comparative example exhibits a predetermined degree of degradation (-1 %) in the power generation efficiency difference relatively early. Accordingly, the auxiliary chamber forming body needs to be replaced relatively early. In other words, the auxiliary chamber forming body of the divided-chamber gas engine according to the working example is long-lived since the opening edge of each nozzle 9 at the auxiliary chamber 2 side has a chamfered shape.

Industrial Applicability

According to the present invention, temporal changes to the shape of the nozzles (nozzle holes) of the auxiliary combustion chamber do not easily occur. This reduces changes in the jet flame intensity and variations among the nozzles in terms of the jet flame intensity. Therefore, the present invention makes it possible to provide an efficient gas engine with reduced temporal degradation in performance. Moreover, in the divided-chamber gas engine according to the present invention, distortion in the shape of the nozzles' openings at the auxiliary chamber side is prevented, and thereby an occurrence of swirl flow is suppressed. As a result, decrease in the jet flame intensity is prevented, and thus effective energy utilization is realized.

**Reference Signs List**

1    main combustion chamber (main chamber)
2    auxiliary combustion chamber (auxiliary chamber)
3    spark plug
4    main solenoid valve
5    auxiliary solenoid valve
6    check valve
7    piston
8    crank
9    nozzle (nozzle hole)

11    curved surface

**Claims**

1.  A divided-chamber gas engine configured to inject a combustion gas from an auxiliary combustion chamber through a plurality of nozzles, through which the auxiliary combustion chamber and a main combustion chamber are in communication with each other, so as to ignite a fuel in the main combustion chamber, wherein an opening edge, at the auxiliary combustion chamber side, of each of the plurality of nozzles has a chamfered shape.

2.  The divided-chamber gas engine according to claim 1, wherein the chamfered shape is a round chamfered shape, and the opening edge is formed to have a curved surface.

3.  The divided-chamber gas engine according to claim 1 or claim 2, wherein a portion, having the chamfered shape, of the opening edge, at the auxiliary combustion chamber side, of each of the plurality of nozzles is spaced apart from a portion, having the chamfered shape, of the opening edge, at the auxiliary combustion chamber side, of the other of the plurality of nozzles, such that interference between the portions having the chamfered shape is prevented.

4.  The divided-chamber gas engine according to claim 2, wherein the curved surface has a curvature radius greater than or equal to a diameter of each nozzle.

5.  The divided-chamber gas engine according to claim 2, wherein the curved surface has a curvature radius which is set, such that a temperature increase or decrease at the opening edge, at the auxiliary combustion chamber side, of each of the plurality of nozzles is less than a temperature increase or decrease at a portion of an inner wall of the auxiliary combustion chamber, the portion being a closest portion of the inner wall to the main combustion chamber.

**Amended claims under Art. 19.1 PCT**

1. (Amended) A divided-chamber gas engine configured to inject a combustion gas from an auxiliary combustion chamber through a plurality of nozzles, through which the auxiliary combustion chamber and a main combustion chamber are in communication with each other, so as to ignite a fuel in the main combustion chamber, wherein an opening edge, at the auxiliary combustion chamber side, of each of the plurality of nozzles is formed to have a curved surface in a round chamfered shape, and the curved surface has a curvature radius which is set such that a temperature increase or decrease at the opening edge, at the auxiliary combustion chamber side, of each of the plurality of nozzles is less than a temperature increase or decrease at a portion of an inner wall of the auxiliary combustion chamber, the portion's temperature beingmost easily increased among all portions of the inner wall other than the opening edges.

2. (Cancelled)

3. (Amended) The divided-chamber gas engine according to claim 1, wherein a portion, having the chamfered shape, of the opening edge, at the auxiliary combustion chamber side, of each of the plurality of nozzles is spaced apart from a portion, having the chamfered shape, of the opening edge, at the auxiliary combustion chamber side, of the other of the plurality of nozzles, such that interference between the portions having the chamfered shape is prevented.

4. (Amended) The divided-chamber gas engine according to claim 1, wherein the curved surface has a curvature radius greater than or equal to a diameter of each nozzle.

5. (Cancelled)

6. (New) The divided-chamber gas engine according to claim 1, comprising a cooling medium which is in contact with an auxiliary chamber forming body forming the auxiliary combustion chamber to cool the auxiliary chamber forming body, wherein the curvature radius of the curved surface of the opening edge is set based on an area $A_2$ of the curved surface, the area $A_2$ satisfying a relationship in the following equation:

$$A_2 \geq \frac{L_2}{L_1} A_1 \times \frac{1}{n} \quad ,$$

and in the equation,

$A_1$ is a thermal-conduction area of the portion of the inner wall of theauxiliary combustion chamber, the portion's temperature being most easily increased among all the portions of the inner wall other than the opening edges,

$L_1$ is a distance by which heat is conducted from the portion to the cooling medium,

$A_2$ is an area of the curved surface of the opening edge, at the auxiliary combustion chamber side, of one of the plurality of nozzles,

$L_2$ is a distance by which heat is conducted from the curved surface of the opening edge to the cooling medium, and

n is the number of nozzles which are open to the auxiliary combustion chamber.

**7.** (New) The divided-chamber gas engine according to claim 1 or claim 6, wherein

an auxiliary chamber forming body forming the auxiliary combustion chamber partially protrudes into the main combustion chamber, and

the portion of the inner wall of the auxiliary combustion chamber, the portion's temperature being most easily increased among all the portions of the inner wall other than the opening edges, is included in a protruding end portion of the auxiliary chamber forming body, the protruding end portion protruding into the main combustion chamber.

In Certain Observations on the International Application (VIII) in the written opinion (WO/ISA) issued by the International Searching Authority regarding the international application No. PCT/JP2010/007558, it is pointed out as follows: "Although the claims and specification recite that 'such that a temperature increase or decrease at the opening edge, at the auxiliary combustion chamber side...is less than a temperature increase or decrease at a portion of an inner wall of the auxiliary combustion chamber, the portion being a closest portion of the inner wall to the main combustion chamber', the technical meaning of the recitation is not readily understood; in particular, it is unclear whether the 'temperature increase or decrease' means a temperature value itself when the temperature is increased/decreased or an increase/decrease by which the temperature varies when the temperature is increased/decreased".

The temperature increase or decrease in the above recitation cited in the written opinion means 'an increase/decrease by which the temperature varies when the temperature is increased/decreased'. Although this is not directly mentioned in the originally filed specification, such an intended meaning is clearly understood from the description in paragraphs 0028 to 0031 of the originally filed specification in light of the technical standard at the time of filing the present application.

Fig. 1

Fig. 2

$2$

$11$

$R$

$D$

$1$

$9$

$R \geq D$

Fig. 3

Fig. 4

Fig. 5

Fig. 6

Fig. 7

Fig. 8

WORKING EXAMPLE

AFTER 4000 Hr OPERATION

Fig. 9

COMPARATIVE EXAMPLE

AFTER 1000 Hr OPERATION

Fig. 10

EFFECT ON POWER GENERATION EFFICIENCY

Fig. 11

Fig. 12

Fig. 13

## INTERNATIONAL SEARCH REPORT

International application No.

PCT/JP2010/007558

A. CLASSIFICATION OF SUBJECT MATTER
*F02B19/16*(2006.01)i, *F02B19/10*(2006.01)i, *F02B19/18*(2006.01)i

According to International Patent Classification (IPC) or to both national classification and IPC

B. FIELDS SEARCHED

Minimum documentation searched (classification system followed by classification symbols)
F02B19/16, F02B19/10, F02B19/18

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2011 |
| Kokai Jitsuyo Shinan Koho | 1971–2011 | Toroku Jitsuyo Shinan Koho | 1994–2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2003-254195 A (Mitsubishi Heavy Industries, Ltd.),<br>10 September 2003 (10.09.2003),<br>paragraph [0023]; fig. 1<br>(Family: none) | 1-4<br>5 |

☐ Further documents are listed in the continuation of Box C.　　☐ See patent family annex.

| | |
|---|---|
| *　　Special categories of cited documents:<br>"A"　document defining the general state of the art which is not considered to be of particular relevance<br>"E"　earlier application or patent but published on or after the international filing date<br>"L"　document which may throw doubts on priority claim(s) or which is cited to establish the publication date of another citation or other special reason (as specified)<br>"O"　document referring to an oral disclosure, use, exhibition or other means<br>"P"　document published prior to the international filing date but later than the priority date claimed | "T"　later document published after the international filing date or priority date and not in conflict with the application but cited to understand the principle or theory underlying the invention<br>"X"　document of particular relevance; the claimed invention cannot be considered novel or cannot be considered to involve an inventive step when the document is taken alone<br>"Y"　document of particular relevance; the claimed invention cannot be considered to involve an inventive step when the document is combined with one or more other such documents, such combination being obvious to a person skilled in the art<br>"&"　document member of the same patent family |

| Date of the actual completion of the international search<br>　21 January, 2011 (21.01.11) | Date of mailing of the international search report<br>　01 February, 2011 (01.02.11) |
|---|---|
| Name and mailing address of the ISA/<br>　Japanese Patent Office | Authorized officer |
| Facsimile No. | Telephone No. |

Form PCT/ISA/210 (second sheet) (July 2009)

## INTERNATIONAL SEARCH REPORT

| International application No. |
| --- |
| PCT/JP2010/007558 |

**Box No. II     Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III     Observations where unity of invention is lacking (Continuation of item 3 of first sheet)**

This International Searching Authority found multiple inventions in this international application, as follows:
```
   The constitution of claim 1 of the present application is described in the
document 1.  Therefore, the invention in claim 1 cannot be considered to be
novel in the light of the invention described in the document 1, and does
not have a special technical feature.
```

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**     ☐ The additional search fees were accompanied by the applicant's protest and, where applicable, the payment of a protest fee.

     ☐ The additional search fees were accompanied by the applicant's protest but the applicable protest fee was not paid within the time limit specified in the invitation.

     ☐ No protest accompanied the payment of additional search fees.

Form PCT/ISA/210 (continuation of first sheet (2)) (July 2009)

**EP 2 520 780 A1**

**Patent documents cited in the description**

- JP 3070812 A
- JP 5504185 W